# EUROPÄISCHE PATENTSCHRIFT

(11) **EP 1 958 472 B1**
(45) Veröffentlichungstag und Bekanntmachung des Hinweises auf die Patenterteilung: **16.03.2011**
(21) Anmeldenummer: 06830255.3
(22) Anmeldetag: 30.11.2006
(51) Int. Cl.: H04W 12/12, G06F 21/00

(54) **VERFAHREN ZUM ZUGRIFF AUF EIN MOBILES ENDGERÄT UND MOBILES ENDGERÄT ZUM EINSATZ IN EINEM MEHRZELLEN-FUNKNETZWERK**
METHOD FOR ACCESSING A MOBILE TERMINAL, AND MOBILE TERMINAL TO BE USED IN A MULTICELL WIRELESS NETWORK
PROCEDE D'ACCES A UN TERMINAL MOBILE ET TERMINAL MOBILE DESTINE A ETRE EMPLOYE DANS UN RESEAU RADIO MULTICELLULAIRE

(30) Priorität: 07.12.2005 DE 102005058434
(43) Veröffentlichungstag der Anmeldung: 20.08.2008
(73) Patentinhaber: Cycos Aktiengesellschaft, 52477 Alsdorf (DE)
(72) Erfinder: DEJONGHE, Manuel, 52062 Aachen (DE); SCHNABEL, Daniel, 50189 Elsdorf (DE); SCHUNCK, Markus, 52441 Linnich (DE); VLAHOVIC, Donald, 52134 Herzogenrath (DE)
(74) Vertreter: Fritzsche, Thomas
(86) Internationale Anmeldenummer: PCT/EP2006/069162
(87) Internationale Veröffentlichungsnummer: WO 2007/065848

(56) Entgegenhaltungen:
- EP-A- 1 523 202
- WO-A-01/84455
- WO-A-2004/098219
- US-A1- 2005 027 844

## Beschreibung

Die Erfindung betrifft ein Verfahren zum Zugriff auf ein mobiles Endgerät und ein mobiles Endgerät zum Einsatz in einem Mehrzellen-Funknetzwerk.

Dokument US 2005/027844 A1 zeigt eine Vorrichtung/ein Verfahren zur Verfolgung und Fernsteuerung von tragbaren Computervorrichtungen, welche dazu verwendete Client-Komponenten aufweisen.

Endgeräte zum Einsatz in Kommunikationsumgebungen sind regelmäßig mit Datenspeichern versehen, in denen sowohl sog. Kundendaten als auch sog. Konfigurationsdaten gespeichert sind. Das betrifft insbesondere auch die mobilen Endgeräte, die in Mehrzellen-Funknetzwerken betrieben werden, beispielsweise die GSM-Mobiltelefone, DECT-Endgeräte und auch WLAN-Geräte, wobei die letztgenannten WLAN-Geräte (PCs, PDAs, etc.) wegen ihrer Möglichkeiten zur Kommunikation (Voice-over-IP-Telephone o.ä.) auch als Kommunikations-Endgeräte betrachtet werden.

Zu den erwähnten Kundendaten gehören beispielsweise Adress- und Rufnummernverzeichnisse, gespeicherte Nutzdaten (Dateien, Bilder, Nachrichten etc.) und kundenspezifische Einstellungen (Audio-Profile, Einstellungen für die Lautstärke, Anrufumleitungen etc.) Die Konfigurationsdaten betreffen meist technisch bedingte Voreinstellungen, beispielsweise die Adressen von SMS-Gateways, Einstellungen für die Sprachcodecs, o.ä.. Dabei lassen sich viele Einstellungen sowohl den Kundendaten als auch den Konfigurationsdaten zuordnen.

Die mobilen Endgeräte sind mit Mitteln ausgestattet, mit denen sie von einem Benutzer eingestellt (Konfiguriert) werden können, wobei diese Mittel in der Regel eine Tastatur bzw. ein sog. Touch-Screen und eine Anzeigevorrichtung (Display) umfassen. Damit können Geräte-Parameter eingestellt, Adressen und Rufnummern eingegeben bzw. gepflegt werden etc..

Mit der fortschreitenden Miniaturisierung der mobilen Endgeräte ist die Bedienung zur Eingabe von Daten (Adressen, Telefonnummern etc.) zunehmend unkomfortabel; hinzu kommt, dass die mobilen Endgeräte häufig eine Vielzahl von verschiedenen Funktionen aufweisen und somit neben der reinen Kommunikationsfunktion (Telefon) auch zum Verwalten von Terminen, zur Speicherung und Wiedergabe elektronischer Dokumente, zum Fotografieren usw. verwendet werden. Dadurch steigt der Konfigurationsbedarf und somit auch die Anforderung, die Konfiguration möglichst einfach, bequem und effizient durchführen zu können.

Um diese Anforderung zu erfüllen, werden die mobilen Endgeräte häufig mit Personalcomputern oder anderen Datenverarbeitungsgeräten verbunden, so dass die Konfiguration nicht direkt an dem mobilen Endgerät erfolgen muss, sondern beispielsweise über einen wesentlich ergonomischeren Arbeitsplatz-Rechner (PC). Darüber hinaus sind selbstverständlich auch die Sicherung und Wiederherstellung von Nutzdaten und Konfigurationsdaten und die Synchronisation solcher Daten mit anderen Datenbanken, beispielsweise einem E-Mail-Programm, möglich. Zur Verbindung der mobilen Endgeräte mit den stationären Einrichtungen (Personal-Computer o.ä.) werden in der Regel sog. Datenkabel verwendet; alternativ dazu werden häufig auch Infrarot-Schnittstellen, Bluetooth-Verbindungen oder auch andere Kurzstrecken-Funkverbindungen (beispielsweise WLAN-Verbindungen) verwendet. Sobald das mobile Endgerät über eine solche Verbindung mit der stationären Einrichtung verbunden ist, wird mittels eines sog. Konfigurationsprogramms oder eines sog. Synchronisations-Programms auf den Datenspeicher des mobilen Endgerätes zugegriffen, wobei es sich allerdings als nachteilig erwiesen hat, dass für die mobilen Endgeräte unterschiedlicher Hersteller bzw. unterschiedlicher Baureihen auch jeweils daran angepasste Konfigurationsprogramme bzw. Synchronisations-Programme verwendet werden müssen.

Ein weiteres Problem bei der Verwendung eines mobilen Endgerätes besteht im Fall des Diebstahls bzw. einer daran anschließenden missbräuchlichen Nutzung. Da der Diebstahl eines mobilen Endgerätes durch den Hersteller kaum wirksam verhindert werden kann, werden anstelle dessen Maßnahmen ergriffen, die die Nutzung eines gestohlenen mobilen Endgerätes erschweren oder verhindern und somit den Anreiz für einen Diebstahl verringern sollen. So werden die mobilen Endgeräte durchweg mit einer sog. SIM-Karte (SIM: Subscriber Identification Module) betrieben, wobei sich das mobile Endgerät mittels der auf der SIM-Karte gespeicherten Daten in ein mobiles Kommunikationsnetzwerk "einbucht". Mit der SIM-Karte ist auch die Kommunikationsadresse (Rufnummer) verknüpft, unter der das mobile Endgerät erreicht werden kann. Beim Einschalten eines mobilen Endgerätes wird regelmäßig eine der SIM-Karte zugeordnete Geheimnummer (PIN: Personal Identification Number) abgefragt, so dass ein gestohlenes mobiles Endgerät nicht dauerhaft mit der ebenfalls gestohlenen SIM-Karte betrieben werden kann. In vielen Fällen können gestohlene mobile Endgerätes aber weiter genutzt werden, indem eine andere SIM-Karte eingesetzt wird. Um dieses Problem wiederum zu umgehen, gibt es bei vielen mobilen Endgeräten die Möglichkeit, eine separate Geheimzahl zu programmieren, die eingegeben werden muss, sobald das mobile Endgerät mit einer anderen SIM-Karte betrieben werden soll. Damit ist ein gestohlenes mobiles Endgerät zwar in vielen Fällen für den Dieb unbrauchbar (sofern diese Möglichkeit der Programmierung einer Geheimzahl genutzt wird), dennoch ist das mobile Endgerät damit für den rechtmäβigen Eigentümer verloren.

Eine andere Strategie zur Vermeidung eines Diebstahls bzw. zur Verringerung dessen Folgen besteht darin, die Benutzung des mobilen Endgerätes mit einer "fremden" SIM-Karte nicht zu verhindern (also nicht eine weitere Geheimnummer wie oben beschrieben zu programmieren), sondern die geräte-individuelle Identifizierungsnummer (IMEI: International Mobile Equipment Identification) an eine Zentralstelle der Mobilfunk-Netzbetreiber zu melden und abzuwarten, bis ein Dieb das Mobilfunkgerät (mobiles Endgerät) in Betrieb nimmt. Bei jeder Inbetriebsetzung bzw. Nutzung übermitteln die mobilen Endgeräte nämlich die IMEI-Nummer an den Netzbetreiber, so dass dort ein Abgleich mit der Datenbank für gestohlene mobile Endgeräte erfolgen kann, wodurch die im Missbrauchsfall verwendete SIM-Karte dem gestohlenen mobilen Endgerät zugeordnet werden kahn. Die bei dem Netzbetreiber der verwendeten SIM-Karte zugeordneten Benutzerdaten führen dann zur Lokalisierung des Endgerätes bzw. zu dessen neuen "Besitzer".

Dieses Verfahren zur Identifizierung des missbräuchlichen Nutzers wird aber von den meisten Netzbetreibern nicht oder nicht mehr unterstützt, unter anderem, weil viele Benutzer die IMEI-Nummer ihres Mobiltelefons nicht wissen, und weil viele Netzbetreiber den Aufwand des regelmäßigen Abgleich verwendeter IMEI-Nummern mit der Datenbank für gestohlene Mobiltelefone einsparen wollen. Es ist also für den Eigentümer eines gestohlenen mobilen Endgerätes schwierig und sogar oft unmöglich, den neuen "Besitzer" zu identifizieren bzw. sein Eigentum zu lokalisieren.

Es ist eine Aufgabe der vorliegenden Erfindung, die Folgen eines Diebstahls eines mobilen Endgerätes zu vermindern, und die Lokalisierung des mobilen Endgerätes zu vereinfachen. Es ist eine weitere Aufgabe der vorliegenden Erfindung, die Konfiguration eines mobilen Endgerätes zu vereinfachen und den Zugriff auf die in einem mobilen Endgerät gespeicherten Daten und Informationen zu verbessern.

Die Aufgabe wird durch ein Verfahren gemäß des Patentanspruchs 1 und durch ein mobiles Endgerät gemäß des Patentanspruchs 13 gelöst.

Zur Lösung der Aufgabe wird ein Verfahren zum Zugriff auf ein mobiles Endgerät vorgeschlagen, bei dem in einem ersten Schritt in das mobile Endgerät eine erste Zieladresse einer ersten Einrichtung eingegeben wird und in einem zweiten Schritt durch das mobile Endgerät mittels der eingegebenen ersten Zieladresse eine dem mobilen Endgerät aktuell zugeordnete Internet-Adresse an die erste Einrichtung gesendet wird. In einem dritten Schritt wird von der ersten oder einer weiteren Einrichtung mittels der übertragenen Internet-Adresse auf das mobile Endgerät zugegriffen, wobei durch das mobile Endgerät mittels eines in diesem mobilen Endgerät integrierten Web-Servers Funktionen zur Konfiguration und/oder zur Lokalisierung des mobilen Endgerätes bereitgestellt werden. Durch dieses Verfahren ist das mobile Endgerät auch dann zugreifbar, wenn es mit einer anderen als der ursprünglichen SIM-Karte und damit mit einer anderen Rufnummer betrieben wird. Außerdem ist bei einer Konfiguration bzw. bei einem Zugriff durch das erfindungsgemäße Verfahren die räumliche Entfernung des mobilen Endgerätes von der konfigurierenden Einrichtung unerheblich, weil das mobile Endgerät für den Zugriff lediglich mit dem Internet verbunden sein muss. Durch den Einsatz eines Web-Servers genügt darüber hinaus für den Zugriff ein entsprechendes Browser-Programm.

Die Lösung der Aufgabe sieht außerdem ein mobiles Endgerät zum Einsatz in einem Mehrzellenfunknetzwerk vor, mit einer Authentifizierungseinrichtung zur Identifikation eines berechtigten Nutzers, mit einer Eingabevorrichtung zur Eingabe einer ersten Zieladresse, mit einer Funktion zur Detektierung eines SIM-Karten-Wechsels und/oder eines Wechsels einer dem mobilen Endgerät zugeordneten Internet-Adresse, mit einer Übermittlungseinrichtung für eine durch die Detektierungsfunktion gesteuerte Übermittlung einer derzeitigen Internet-Adresse des mobilen Endgerätes, und mit einer integrierten Web-Server-Einheit, welche über die übermittelte Internet-Adresse zugreifbar ist und welche eine Benutzeroberfläche zur Konfiguration, zur Lokalisierung und zur Sperrung des mobilen Endgerätes bereitstellt. Ein solches mobiles Endgerät kann zum einen über das Internet konfiguriert werden, und zum anderen kann ein solches mobiles Endgerät auch im Fall einer missbräuchlichen Nutzung oder bei einer sonstigen Änderung seiner zugeordneten Rufnummer bzw. Internet-Adresse zugegriffen werden.

Vorteilhafte Ausgestaltungen des erfindungsgemäßen Verfahrens sind in den abhängigen Patentansprüchen 2 bis 12 angegeben. Deren Merkmale und Vorteile gelten sinngemäß auch für das erfindungsgemäße mobile Endgerät.

Wenn durch das mobile Endgerät vor dem dritten Schritt eine Verbindung zum Internet aufgebaut wird, können Verfahrensschritte und Einrichtungen eingespart werden, mit denen das mobile Endgerät von einer externen Einrichtung aus zum Aufbau dieser Verbindung angeregt werden kann.

Das Verfahren kann zur Diebstahlsicherung des mobilen Endgerätes eingesetzt werden, in dem der zweite Schritt zumindest dann ausgeführt wird, wenn in dem mobilen Endgerät eine andere als die zum Zeitpunkt der Eingabe der ersten Zieladresse eingesetzte SIM-Karte verwendet wird, und/oder ein Wechsel der dem mobilen Endgerät zugeordneten Internet-Adresse erfolgt. Alternativ oder zusätzlich kann das mobile Endgerät auch so eingestellt sein, dass die Übermittlung der Internet-Adresse bei jedem Einschalten oder in regelmäßigen Zeitabständen erfolgt.

Besonders im Fall der Verwendung des Verfahrens als Diebstahlsicherung ist es von vorteil, wenn in dem dritten Schritt über den web-Server Informationen bereitgestellt werden, welche den derzeitigen Standort und/oder die zuletzt erfassten Standorte des mobilen Endgerätes betreffen. Dadurch wird das Auffinden eines verloren gegangenen oder gestohlenen mobilen Endgerätes erleichtert. Dabei ergibt sich eine hohe Präzision der Positionsangabe, wenn von dem mobilen Endgerät zur Positionserfassung ein GPS-Signal ausgewertet wird. Der Einsatz eines GPS-Empfängers kann jedoch auch eingespart werden, wenn für die in dem dritten Schritt über den Web-Server bereitgestellten Informationen Angaben über eine derzeit verwendete Mobilfunkzelle und/oder Informationen über die derzeit empfangbaren Mobilfunk-Basisstationen verwendet werden. Bei gleichzeitiger Übermittlung mehrerer Empfangsfeldstärken und/oder Signallaufzeiten zu den Mobilfunk-Basisstationen kann darüber hinaus vorteilhaft eine Triangulation zur genaueren Positionsbestimmung durchgeführt werden.

Eine unauthorisierte Beendigung des Verfahrens oder eine unauthorisierte Änderung der ersten Zieladresse kann verhindert werden, indem in dem ersten Schritt für die Eingabe und/oder für eine Änderung der ersten Zieladresse eine Authentifizierung abgefragt wird, wobei vorteilhaft für die Authentifizierung die Abfrage einer Geheimzahl (PIN) oder ein anderes gebräuchliches Verfahren eingesetzt wird.

Die Identifizierung des derzeitigen Nutzers des mobilen Endgerätes bzw. die Kontaktaufnahme zu dem Benutzer des mobilen Endgerätes wird ermöglicht, wenn in dem dritten Schritt die derzeitige Rufnummer des mobilen Endgerätes und/oder eine Identifizierung der derzeit verwendeten SIM-Karte (IMIS-Nummer) bereitgestellt wird.

Eine Korrumpierung vertraulicher Daten eines verloren gegangenen mobilen Endgerätes kann verhindert werden, wenn in dem dritten Schritt eine Funktion zur Löschung vertraulicher Daten und/oder eine Funktion zur Sperrung des mobilen Endgerätes bereitgestellt wird. Dabei kann die Sperrung das mobile Endgerät insoweit unbrauchbar machen, als dass es für einen Finder bzw. Dieb wertlos wird.

Das Verfahren kann vorteilhaft auch zur Konfiguration eines mobilen Endgerätes eingesetzt werden, wenn mittels einer in dem dritten Schritt über den web-Server angebotenen Funktion eine Adressdatenbank des mobilen Endgerätes mit einer in der ersten oder einer weiteren Einrichtung vorhandenen Adressdatenbank synchronisiert wird. Mit dieser Funktion lässt sich darüber hinaus auch der Datenbestand eines verloren gegangenen mobilen Endgerätes nachträglich sichern.

Ein Benutzer kann das Versenden der für den Zugriff notwendigen Internet-Adresse des mobilen Endgerätes leicht an sich selbst veranlassen, wenn in dem zweiten Schritt die Internet-Adresse des mobilen Endgerätes als SMS-Nachricht und/oder als E-Mail-Nachricht versendet wird, wobei als erste Zieladresse eine Rufnummer bzw. eine E-Mail-Adresse verwendet wird. Vorteilhaft wird dabei eine dem Benutzer zugeordnete E-Mail-Adresse oder eine zweite, dem Benutzer zugeordnete Rufnummer, die sich von der Rufnummer des mobilen Endgerätes unterscheidet, verwendet. Der Begriff SMS-Nachricht (SMS = Short-Message-Service) umfasst im Kontext dieser Patentanmeldung auch die artverwandten MMS-Nachrichten (MMS = Multimedia-Message-Service) und andere funktions-äquivalente Nachrichten-Arten.

Ausführungsbeispiele des erfindungsgemäßen Verfahrens sind nachfolgend anhand der Zeichnung erläutert. Die Beispiele dienen gleichzeitig auch der Erläuterung eines erfindungsgemäßen mobilen Endgerätes.

Dabei zeigen:
- Figur 1: eine Anordnung aus einem mobilen Endgerät mit einem integrierten Web-Server, einer Mobilfunkbasisstati- on und einem PC,
- Figur 2: eine von einem mobilen Endgerät zu einer zentralen Einrichtung versendete Nachricht mit einer Inter- net-Adresse des mobilen Endgerätes, und
- Figur 3: ein von einer zentralen Einrichtung zu einem mobi- len Endgerät versendete Konfigurations-Nachricht.

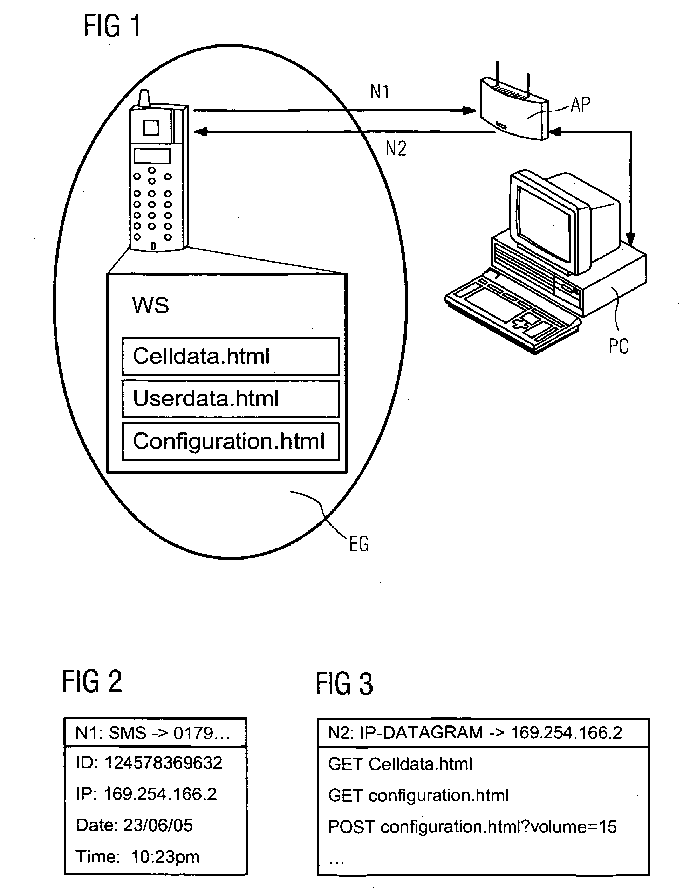

In der Figur 1 ist schematisch ein mobiles Endgerät EG dargestellt, welches für den Betrieb in einem Mehrzellen-Funknetzwerk ausgelegt ist. Im vorliegenden Ausführungsbeispiel ist das mobile Endgerät EG ein Mobiltelefon gemäß des GSM-Standards; stattdessen können selbstverständlich auch andere mobile Endgeräte wie z.B. WLAN-Clients, DECT-Telefone, UMTS-Geräte o.ä. eingesetzt werden. Weiter ist in der Figur 1 exemplarisch für das Funknetzwerk eine Funkbasisstation AP ("Access-Point") dargestellt; die Funkbasisstation AP ist dabei stellvertretend für ein Funknetzwerk mit einer unbeschränkten Anzahl Funkbasisstationen, die einander überlappende Funkzellen bilden, dargestellt. Ein in der Figur 1 ebenfalls dargestellter Computer PC ist mit dem Funknetzwerk und damit mit der Funkbasisstation AP verbunden. Die dabei benutzte Verbindung ist in diesem Ausführungsbeispiel über das Internet geführt.

Das dargestellte mobile Endgerät EG ist mit einer gültigen SIM-Karte ausgestattet, so dass dem Endgerät EG eine Rufnummer zugeordnet ist, über die das Endgerät erreichbar ist. Daneben ist das mobile Endgerät EG auch zum Zugriff auf das Internet ausgebildet, beispielsweise zum Austausch von elektronischen Nachrichten (E-Mails) und zum Zugriff auf Internet-Seiten (HTML-Seiten, WAP-Seiten etc.). Dazu ist das mobile Endgerät EG über eine Datenverbindung permanent mit dem Internet verbunden bzw. verbindbar und ist außerdem mit einer IP-Adresse konfiguriert, so dass Datenpakete aus dem Internet direkt an das mobile Endgerät EG adressiert werden können. Bei der Datenverbindung handelt es sich hier um eine GPRS-Datenverbindung (GPRS: General Packet Radio System); selbstverständlich können auch andere Übertragungswege, beispielsweise WLAN, UMTS etc. für den Datenaustausch verwendet werden. Auch in den letztgenannten Fällen ist das mobile Endgerät EG mit einer Internet-Adresse oder einer anderen, vergleichbar zugreifbaren Adresse ausgestattet.

Das mobile Endgerät EG ist außerdem mit einem Web-Server WS ausgestattet. Der Web-Server WS ist dabei eine logische Instanz, die zur Bereitstellung einer Internetseite ("Website") eingerichtet ist. Über die Internet-Adresse (IP-Adresse) des mobilen Endgerätes und eine allgemein bekannte IP-Portnummer (ein sog. "Well-Known-Port") kann die durch den Web-Server WS bereitgestellte Internet-Seite auf jedem beliebigen anderen Endgerät dargestellt werden, welches über das Internet oder eine andere Datenverbindung Zugriff auf das mobile Endgerät EG hat und welches mit einer entsprechenden Anzeigesoftware (sog. "Browser"-Programm) ausgerüstet ist. Im vorliegenden Ausführungsbeispiel stellt der Web-Server WS eine Vielzahl verschiedener Seiten bereit, wobei in der Figur 1 die Seiten "Celldata.html", "Userdata.html" und "Configuration.html" aufgelistet sind. Die Funktionalität dieser Seiten wird im weiteren Verlauf dieser Beschreibung näher erläutert.

Über die durch den Web-Server WS bereitgestellten Seiten können sowohl die Kundendaten und die Konfigurationsdaten des mobilen Endgerätes EG bearbeitet werden, als auch Aktionen ausgeführt werden, die im Zusammenhang mit einem Verlust des mobilen Endgerätes, beispielsweise durch "Verlieren" oder Diebstahl, notwendig sind. Da in beiden Fällen die gleichen Zugriffsmechanismen genutzt werden, beschränkt sich dieses Ausführungsbeispiel im Wesentlichen auf das Anwendungsszenario "Diebstahl". Die entsprechenden Funktionen erfordern eine zusätzliche Authentifizierung des zugreifenden Benutzers; hier wird die Eingabe einer PIN verlangt.

Zum Schutz des mobilen Endgerätes EG vor einem Diebstahl bzw. um das Wiederauffinden des mobilen Endgerätes EG zu erleichtern, wird zunächst davon ausgegangen, dass dem mobilen Endgerät EG bei einem "unfreiwilligen Besitzerwechsel" eine neue SIM-Karte eingesetzt wird. Dadurch ändert sich sowohl die dem mobilen Endgerät zugeordnete Rufnummer, als auch eine dem mobilen Endgerät EG zugewiesene Internet-Adresse (IP-Adresse). Die Internet-Adresse kann sich darüber hinaus auch im regulären Betrieb durchaus ändern, beispielsweise beim Aus- und Wiedereinschalten, beim Wechsel einer Funkzelle oder beim Roaming in einem anderen Funknetzwerk. Daher ist das mobile Endgerät EG so eingerichtet, dass die ihm zugewiesene IP-Adresse zumindest nach einem Auswechseln der SIM-Karte an eine erste (vorherbestimmte) Einrichtung versendet wird. Das mobile Endgerät EG weist dazu Mittel auf, die den Wechsel der SIM-Karte feststellen, beispielsweise, indem bei jedem Einschalten des mobilen Endgerätes die Seriennummer der verwendeten SIM-Karte gespeichert wird und beim nächsten Einschalten die dann vorliegende Seriennummer mit der gespeicherten Seriennummer verglichen wird. Weiter kann das mobile Endgerät EG auch so eingestellt sein, dass nach jedem Einschalten, bei jedem Wechsel der zugewiesenen IP-Adresse oder in vorher festgelegten Zeitabständen eine entsprechende Adressmeldung erfolgt.

Die beschriebene Meldung der (aktuellen) Internet-Adresse erfolgt mittels einer Adressnachricht N1 an die erste Einrichtung unter Verwendung einer Zieladresse dieser ersten Einrichtung. Diese Zieladresse wird von dem rechtmäßigen Besitzer des mobilen Endgerätes zumindest einmalig in das mobile Endgerät einprogrammiert, wobei die entsprechende Funktion zur Eingabe bzw. Bearbeitung dieser Zieladresse durch eine ebenfalls von dem Besitzer eingebbare Geheimzahl (PIN) oder ein anderes Verfahren geschützt ist.

Die Zieladresse kann beispielsweise die E-Mail-Adresse eines elektronischen Postfaches des Benutzers sein; im vorliegenden Ausführungsbeispiel wird als Zieladresse eine Mobilfunk-Rufnummer verwendet, welche dem Eigentümer des mobilen Endgerätes zugeordnet ist, wobei die an diese Rufnummer versendeten Nachrichten (Kurznachrichten, SMS) dem Benutzer/Eigentümer ebenfalls per E-Mail-Nachricht zugestellt werden.

Natürlich kann die Rufnummer auch einem zweiten mobilen Endgerät des Benutzers oder einer anderen Einrichtung zugeordnet sein, so lange sichergestellt ist, dass die Adressnachricht N1 bzw. die damit übermittelte aktuelle Internet-Adresse des mobilen Endgerätes EG zu der berechtigten Person gelangt.

Die hierbei verwendete Adressnachricht N1 ist in der Figur 2 schematisch dargestellt. Dabei bezeichnet das Datenfeld ID eine Seriennummer des mobilen Endgerätes EG (die sog. IMEI-Nummer), das Datenfeld IP bezeichnet die Internet-Adresse, mit der derzeit auf den Web-Server WS zugegriffen werden kann, danach folgen noch Datum, Uhrzeit und einige weitere, nicht dargestellte Angaben.

Die Adressnachricht N1 wird von dem mobilen Endgerät EG zu der Funkbasisstation AP und von dort aus zu dem Computer PC des Benutzers übertragen. Eine solche Datenübertragung entspricht dem Stand der Technik und wird daher an dieser Stelle nicht weiter ausgeführt.

Der Benutzer kann jetzt in ein Internet-Anzeigeprogramm (Web-Browser) seines Computers PC oder eines anderen, mit dem Internet verbundenen Gerätes die Internet-Adresse (hier: 169.254.166.2) des mobilen Endgerätes EG eingetragen, wodurch eine Datenverbindung, eine sog. Web-Session, zwischen dem Computer PC und dem mobilen Endgerät EG bzw. dem darin enthaltenen Web-Server WS aufgebaut wird. Der Benutzer muss sich nun zunächst einmal gegenüber dem Web-Server WS authentifizieren (dieser Vorgang ist in den Figuren nicht dargestellt), wobei in diesem Ausführungsbeispiel von dem Benutzer dieselbe Geheimnummer (PIN) eingegeben werden muss, die in dem mobilen Endgerät EG auch zur Eingabe bzw. Änderung der Zieladresse für die Adressnachricht N1 verwendet wird.

Dem Benutzer wird nun ein Auswahlmenü mit verschiedenen Funktionen dargeboten, wobei jeder dieser Funktionen eine eigene, von dem Web-Server WS bereitgestellte Informationsseite zugeordnet ist. Diese "Funktionsseiten" sind in dem vorliegenden Ausführungsbeispiel und in der Figur 1 die Seiten "Celldata.html", "Userdata.html" und "Configuration.html". Diese Seiten werden von dem Benutzer bzw. dessen Computer PC mittels Meldungen N2 zugegriffen, wobei eine solche Meldung N2 in der Figur 3 exemplarisch dargestellt ist. Die dort beschriebenen Anweisungen bedeuten, dass beispielsweise zunächst eine Informationsseite über den Mobilfunk-Status des mobilen Endgerätes EG abgerufen wird (Befehl: GET Celldata.html). Die damit aus dem mobilen Endgerät EG abgerufenen Informationen betreffen den derzeit benutzen Mobilfunk-Provider, die derzeitige Rufnummer des mobilen Endgerätes EG, Angaben über die derzeit benutzte Funkzelle und Angaben über die anderen derzeit empfangbaren Funkbasisstationen AP, Seriennummer der derzeitigen SIM-Karte etc.. Diese Informationen können von dem Benutzer (hier: Eigentümer des mobilen Endgerätes EG) verwendet werden, um entweder Kontakt zur dem derzeitigen "Besitzer" des mobilen Endgerätes EG aufzunehmen, oder um das mobile Endgerät EG zu lokalisieren. Alternativ oder zusätzlich kann das mobile Endgerät EG zur Positionserfassung auch ein GPS-Signal auswerten, das von einem GPS-Empfänger des mobilen Endgerätes EG bereit gestellt wird.

Mit dem Befehl "GET Configuration.html" wird dem Benutzer eine Internetseite dargestellt, mit der er auf die Konfigurationsdaten des mobilen Endgerätes EG Zugriff hat. Neben der Möglichkeit, hiermit bequem über den Computer PC Einstellungen des mobilen Endgerätes allgemein zu administrieren, besteht hier außerdem die Möglichkeit, das mobile Endgerät EG allgemein in seiner Funktionalität zu sperren, so dass es bis zur Aufhebung dieser Sperre (beispielsweise durch Eingabe einer Geheimnummer (PIN)) unbrauchbar ist. Ebenso lässt sich hier ein Löschen des kompletten Datenspeichers des mobilen Endgerätes EG veranlassen, so dass etwaige vertrauliche Daten vor unbefugtem Zugriff gesichert werden. Entsprechende Befehle können mit einem sog. "POST"-Befehl, der von dem Internet-Anzeigeprogramm des Computers PC erzeugt wird, eingegeben werden. Der in der Figur 3 exemplarisch gezeigte Befehl "POST Configuration.html?Volume=15" setzt beispielsweise einen Wert für die Lautstärke des Klingeltons des mobilen Endgerätes EG. Üblicherweise werden dem Benutzer auf der Internet-Seite "Configuration.HTML" entsprechende grafische Eingabemittel (sog. GUI-Elemente) dargeboten, die "im Hintergrund" in den entsprechenden "POST"-Befehl umgesetzt werden.

Über die Internet-Seite "Userdata.html" kann der Benutzer nicht nur die in dem mobilen Endgerät EG gespeicherten Daten (z.B. Adressverzeichnisse) bearbeiten, sondern auch auf einfache Weise eine Synchronisation dieser Daten mit einer Datenbank auf dem Computer PC (beispielsweise mit dem Adressverzeichnis seines E-Mail-Programms) veranlassen.

Selbstverständlich kann ein Benutzer auch anstelle seines Computers PC auch ein anderes mobiles Endgerät für den Zugriff verwenden; dieses Gerät muss auch nicht dasjenige sein, zu dem das mobile Endgerät EG die Adressnachricht N1 übermittelt. So ist es beispielsweise möglich, die Datenbestände zweier mobiler Endgeräte EG miteinander zu synchronisieren, so dass ein Benutzer beispielsweise beim Erwerb eines neuen mobilen Endgerätes oder bei der Benutzung mehrerer mobiler Endgeräte EG auf allen seinen Geräten synchrone Datenbestände vorfindet. Eine entsprechende Synchronisierung kann natürlich auch - beispielsweise zeitgesteuert - vollständig automatisiert ablaufen.

Für die Verwendung des geschilderten Verfahrens hinsichtlich der Diebstahlsicherung ist es wichtig, dass die Übermittlung der Adressnachricht N1 und der daran anschließende Zugriff auf den Web-Server WS an dem mobilen Endgerät EG nicht angezeigt wird und vollständig "im Hintergrund" neben der normalen Funktion des mobilen Endgerätes EG abläuft.

Eine besondere Funktion erlaubt es dem Benutzer, über den Computer PC oder eine andere Einrichtung mittels des Web-Servers WS das mobile Endgerät EG zu veranlassen, einen möglichst lauten Signalton abzustrahlen, auch in den Fällen, in denen die Ausgabe von Signaltönen an dem mobilen Endgerät EG abgeschaltet ist. So kann der Benutzer das mobile Endgerät zur Ausgabe des Signaltons veranlassen, sobald er vermutet, dass er sich in der Nähe des gestohlenen bzw. verlorenen mobilen Endgerätes EG aufhält. Diese Funktion ist nicht nur im Fall eines Diebstahls sinnvoll, sondern kann auch ein versehentlich "verlegtes" mobiles Endgerät EG auffindbar machen, selbst wenn es so eingestellt ist, dass es im regulären Betrieb keine "Klingeltöne" ausgibt.

## Patentansprüche

1. Verfahren zum Zugriff auf ein mobiles Endgerät (EG), wobei
• in einem ersten Schritt in das mobile Endgerät (EG) eine erste Zieladresse (0179...) einer ersten Einrichtung (PC) eingegeben wird,
• in einem zweiten Schritt durch das mobile Endgerät (EG) mittels der eingegebenen ersten Zieladresse (0179...) eine dem mobilen Endgerät (EG) aktuell zugeordnete Internet-Adresse (IP) an die erste Einrichtung (PC) gesendet wird, und
• in einem dritten Schritt von der ersten Einrichtung (PC) oder einer weiteren Einrichtung mittels der übertragenen Internet-Adresse (IP) auf das mobile Endgerät (EG) zugegriffen, wird, **dadurch gekennzeichnet, dass** durch das mobile Endgerät (EG) mittels eines in diesem mobilen Endgerät (EG) integrierten Web-Servers (WS) Funktionen zur Konfiguration und/oder zur Lokalisierung des mobilen Endgerätes (EG) bereit gestellt werden.

2. Verfahren nach Patentanspruch 1,
**dadurch gekennzeichnet,**
**dass** durch das mobile Endgerät (EG) vor dem dritten Schritt eine Verbindung zum Internet aufgebaut wird.

3. Verfahren nach Patentanspruch 1 oder 2,
**dadurch gekennzeichnet,**
**dass** das Verfahren zur Diebstahlsicherung des mobilen Endgerätes (EG) eingesetzt wird, wobei der zweite Schritt zumindest dann ausgeführt wird, wenn in dem mobilen Endgerät (EG) eine andere als die zum Zeitpunkt der Eingabe der ersten Zieladresse (0179...) eingesetzte SIM-Karte verwendet wird, und/oder ein Wechsel der dem mobilen Endgerät (EG) zugeordneten Internet-Adresse (IP) erfolgt.

4. Verfahren nach einem der vorhergehenden Patentansprüche,
**dadurch gekennzeichnet,**
**dass** in dem dritten Schritt über den Web-Server (WS) Informationen bereitgestellt werden, welche den derzeitigen Standort und/oder die zuletzt erfassten Standorte des mobilen Endgerätes (EG) betreffen.

5. Verfahren nach Patentanspruch 4,
**dadurch gekennzeichnet,**
**dass** von dem mobilen Endgerät (EG) zur Positionserfassung ein GPS-Signal ausgewertet wird.

6. Verfahren nach Patentanspruch 4 oder 5,
**dadurch gekennzeichnet,**
**dass** für die in dem dritten Schritt über den Web-Server (WS) bereitgestellten Informationen Angaben über eine derzeit verwendete Mobilfunkzelle und/oder Informationen über die derzeit empfangbaren Mobilfunk-Basisstationen (AP) verwendet werden.

7. Verfahren nach einem der vorhergehenden Patentansprüche,
**dadurch gekennzeichnet,**
**dass** in dem ersten Schritt für die Eingabe und/oder eine Änderung der ersten Zieladresse (0179...) eine Authentifizierung abgefragt wird.

8. Verfahren nach Patentanspruch 7,
**dadurch gekennzeichnet,**
**dass** für die Authentifizierung eine Geheimzahl verwendet wird.

9. Verfahren nach einem der vorhergehenden Patentansprüche,
**dadurch gekennzeichnet,**
**dass** in dem dritten Schritt über den Web-Server (WS) die derzeitige Rufnummer des mobilen Endgerätes (EG) und/oder eine Identifizierung der derzeit verwendeten SIM-Karte bereitgestellt wird.

10. Verfahren nach einem der vorhergehenden Patentansprüche,
**dadurch gekennzeichnet,**
**dass** in dem dritten Schritt eine Funktion zur Löschung von in dem mobilen Endgerät (EG) gespeicherten Daten und/oder eine Funktion zur Sperrung des mobilen Endgerätes (EG) bereitgestellt wird.

11. Verfahren nach einem der vorhergehenden Patentansprüche,
**dadurch gekennzeichnet,**
**dass** mittels einer in dem dritten Schritt über den Web-Server (WS) angebotenen Funktion eine Adressdatenbank des mobilen Endgerätes (EG) mit einer in der ersten (PC) oder einer weiteren Einrichtung vorhandenen Adressdatenbank synchronisiert wird.

12. Verfahren nach einem der vorhergehenden Patentansprüche,
**dadurch gekennzeichnet,**
**dass** in dem zweiten Schritt die Internet-Adresse (IP) des mobilen Endgerätes (EG) als SMS-Nachricht und/oder als E-Mail-Nachricht versendet wird, wobei als erste Zieladresse (0179...) eine Rufnummer und/oder eine E-Mail-Adresse verwendet wird.

13. Mobiles Endgerät (EG) zum Einsatz in einem Mehrzellen-Funknetzwerk
**gekennzeichnet durch**
• eine Authentifizierungseinrichtung zur Identifikation eines berechtigten Benutzers,
• eine Eingabevorrichtung zur Eingabe einer ersten Zieladresse (0179...),
• eine Funktion zur Detektierung eines SIM-Karten-Wechsels und/oder eines Wechsels einer dem mobilen Endgerät (EG) zugeordneten Internet-Adresse (IP),
• eine Übertragungseinrichtung für eine **durch** die Detektionseinrichtung gesteuerte Übermittlung einer derzeitigen Internet-Adresse (IP) des mobilen Endgerätes (EG) mittels der eingegebenen ersten Zieladresse, und
• eine integrierte Web-Server-Einheit (WS), welche über die übermittelte Internet-Adresse (IP) zugreifbar ist und welche eine Benutzeroberfläche zur Konfiguration, zur Lokalisierung und zur Sperrung des mobilen Endgerätes (EG) aufweiset.

## Claims

1. A method for accessing a mobile terminal device (MT), wherein:
• in a first step a first destination address (0179...) of a first device (PC) is entered into the mobile terminal device (MT),
• in a second step an Internet address (IP), currently assigned to the mobile terminal device (MT), is transmitted to the first device (PC) by the mobile terminal by means of the first destination address (0179...) which was entered, and
• in a third step the mobile terminal device (MT) is accessed by the first device (PC) or another device by means of the transmitted Internet address (IP), **characterised by** functions for the configuration and/or localisation of the mobile terminal device (MT) being made available by means of an integrated web server (WS) which is integrated in this mobile terminal device (MT).

2. The method of claim 1, **characterised in that** an Internet connection is established by the mobile terminal device (MT) before the third step.

3. The method of claim 1 or 2, **characterised by** an anti-theft procedure for the mobile terminal device (MT) is used, wherein the second step is performed at least when a different SIM card is used in the mobile terminal device (MT) than the one that was used at the time when the first destination address (0179...) was entered, and/or when a change is made to the IP address (IP) that was assigned to the mobile terminal device (MT).

4. The method of any one of the preceding claims, **characterised by** information regarding the current location and/or the last captured locations of the mobile terminal device (MT) being made available via the web server (WS) in the third step.

5. The method of claim 4, **characterised by** a GPS signal being evaluated by the mobile terminal device (MT) in order to establish its location.

6. The method of claim 4 or 5, **characterised by** particulars of a currently used mobile network cell and/or information about the mobile network base stations (AP) which can currently be received being used for the information which is made available via the web server (WS).

7. The method of any one of the preceding claims, **characterised by** an authentication being requested during the first step for the input and/or change of the first destination address (0179...).

8. The method of claim 7, **characterised by** a secret number being used for the authentication.

9. The method of any one of the preceding claims, **characterised in that** the current phone number of the mobile terminal device (MT) and/or and identification of the currently used SIM card is made available via the web server (WS) in the third step.

10. The method of any one of the preceding claims, **characterised in that** a function for deleting data which is saved in the mobile terminal device (MT) and/or a function for blocking the mobile terminal device (MT) is made available in the third step.

11. The method of any one of the preceding claims, **characterised in that** an address database of the mobile terminal device (MT) is synchronised with an address database in the first device (PC) or in another device by means of a function presented via the web server (WS) in the third step.

12. The method of any one of the preceding ciaims, **characterised in that** the Internet address (IP) of the mobile terminal device (MT) is transmitted as a SMS message and/or as an e-mail, whereby a subscriber number and/or an e-mail address is used as a first destination address (0179...).

13. A mobile terminal device (MT) for use in a multi-cell mobile network, **characterised by**:
• an authentication facility for identification of an authorised user,
• an input facility for inputting the first destination address (0179...),
• a function for the detection of a change of SIM cards and/or a change of an Internet address (IP) assigned to the mobile terminal device (MT),
• a transmission facility for a transmission controlled by the detection facility of a current Internet address (IP) of the mobile terminal device (MT) by means of the entered first destination address, and
• an integrated web server unit (WS), which is accessible via the transmitted Internet address (IP) and which has a user interface for the configuration, the localisation and for the blocking of the mobile terminal device (MT).
•

## Revendications

1. Procédé d'accès à un terminal mobile (EG), dans lequel
- au cours d'une première étape, une première adresse de destination (0179...) d'un premier système (PC) est saisie dans le terminal mobile (EG),
- au cours d'une deuxième étape, au moyen de la première adresse de destination saisie (0179...), le terminal mobile (EG) envoie au premier système (PC) une adresse Internet (IP) attribuée actuellement au terminal mobile (EG), et
- au cours d'une troisième étape, le premier système (PC) ou un autre système accède au terminal mobile (EC) au moyen de l'adresse Internet (IP) transmise,
**caractérisé en ce que** le terminal mobile (EG) met à disposition au moyen d'un serveur Web (WS) intégré dans ce terminal mobile (EG) des fonctions destinées à la configuration et/ou la localisation du terminal mobile (EG).

2. Procédé selon la revendication 1,
**caractérisé en ce**
**qu'**une liaison à l'Internet est établie par le terminal mobile (EG) avant la troisième étape.

3. Procédé selon la revendication 1 ou 2,
**caractérisé en ce**
**que** le procédé d'antivol du terminal mobile (EG) est mis en oeuvre, la deuxième étape étant alors au moins exécutée lorsqu'une autre carte SIM que celle mise en oeuvre au moment de la saisie de la première adresse de destination (0179...) est employée dans le terminal mobile (EG), et/ou lorsqu'un changement de l'adresse Internet (IP) attribuée au terminal mobile (EG) a lieu.

4. Procédé selon l'une quelconque des revendications précédentes,
**caractérisé en ce**
**que**, au cours de la troisième étape, le serveur Web (WS) prépare des informations qui concernent le lieu actuel et/ou les lieux détectés en dernier du terminal mobile (EG).

5. Procédé selon la revendication 4,
**caractérisé en ce**
**que** le terminal mobile (EG) évalue un signal GPS dans le but de la détection de position.

6. Procédé selon la revendication 4 ou 5,
**caractérisé en ce**
**que**, pour les informations mises à disposition au cours de la troisième étape par le biais du serveur Web (WS), on emploie des indications sur une cellule de téléphonie mobile employée actuellement et/ou des informations sur les stations de base de téléphonie mobile (AP) recevables actuellement.

7. Procédé selon l'une quelconque des revendications précédentes,
**caractérisé en ce**
**que**, au cours de la première étape, il est demandé une authentification pour effectuer la saisie et/ou une modification de la première adresse de destination 0179...).

8. Procédé selon la revendication 7,
**caractérisé en ce**
**qu'**un code secret est employé pour l'authentification.

9. Procédé selon l'une quelconque des revendications précédentes,
**caractérisé en ce**
**que**, au cours de la troisième étape, le serveur Web (WS) prépare le numéro d'appel actuel du terminal mobile (EG) et/ou une identification de la carte SIM actuellement employée.

10. Procédé selon l'une quelconque des revendications précédentes, **caractérisé en ce que**,
au cours de la troisième étape, il est mis à disposition une fonction pour effacer des données enregistrées dans le terminal mobile (EG) et/ou une fonction pour bloquer le terminal mobile (EG).

11. Procédé selon l'une quelconque des revendications précédentes, **caractérisé en ce que**,
au moyen d'un fonction proposée par le serveur Web (WS) au cours de la troisième étape, une banque de données d'adresses du terminal mobile (EG) est synchronisée avec une banque de données d'adresses présente dans le premier système (PC) ou dans un autre système.

12. Procédé selon l'une quelconque des revendications précédentes, **caractérisé en ce que**,
au cours de la deuxième étape l'adresse Internet (IP) du terminal mobile (EG) est envoyée sous forme de message SMS et/ou de message de courrier électronique, un numéro d'appel et/ou une adresse de courrier électronique servant de première adresse de destination (0179...).

13. Terminal mobile (EG) destiné à être mis en oeuvre dans un réseau de radiocommunication multicellulaire, **caractérisé par**
- un système d'authentification servant à identifier un utilisateur autorisé,
- un dispositif de saisie servant à saisir une première adresse de destination (0179...)
- une fonction permettant de détecter un changement de carte SIM et/ou un changement d'une adresse Internet (IP) attribuée au terminal mobile (EG),
- un système de transmission pour une communication, commandée par le système de détection, d'une adresse Internet (IP) actuelle du terminal mobile (EG) au moyen de la première adresse de destination saisie, et
- une unité de serveur Web (WS) intégrée qui est accessible par le biais de l'adresse Internet (IP) communiquée et qui comporte une interface utilisateur servant à la configuration, à la localisation et au blocage du terminal mobile (EG).
